(19) **Europäisches Patentamt**

**European Patent Office**

**Office européen des brevets**

(11) Veröffentlichungsnummer: **0 230 538**

**A1**

(12) # EUROPÄISCHE PATENTANMELDUNG

(21) Anmeldenummer: **86115939.0**

(22) Anmeldetag: **17.11.86**

(51) Int. Cl.³: **F 16 D 55/22**
**F 16 D 65/02**

(30) Priorität: **16.12.85 DE 3544475**

(43) Veröffentlichungstag der Anmeldung:
**05.08.87 Patentblatt 87/32**

(84) Benannte Vertragsstaaten:
**DE FR GB SE**

(71) Anmelder: **KNORR-BREMSE AG**
**Moosacher Strasse 80 Postfach 401060**
**D-8000 München 40(DE)**

(72) Erfinder: **Wirth, Xaver, Dr.**
**Birkhuhnweg 18**
**D-8045 Ismaning(DE)**

(54) Scheibenbremse für Fahrzeuge.

(57) Bei einer durch Druckmittel oder mechanisch betätigbaren Scheibenbremse wirkt die Zuspannkraft über
einen Zuspannkolben (17), einen vom Zuspannkolben beaufschlagbaren Bremsbelagträger (9) und den Bremsbelag (11)
auf die Bremsscheibe (1) ein. An dem dem Bremsbelagträger
(9) zugewandten stirnseitigen Ende des Zuspannkolbens (17)
ist ein Vorsatzkörper (23) angeordnet, welcher gegenüber
dem Zuspannkolben einen Freiheitsgrad der Bewegung in
Querrichtung aufweist und gegenüber ihm elastisch abgefedert ist. In Axialrichtung stützt sich der Vorsatzkörper (23) mit
Hilfe von Wälzkörpern (25) am Zuspannkolben (17) ab, derart,
daß axiale Zuspannkräfte über die Wälzkörper, den Vorsatzkörper (23), den Bremsbelagträger (9) und den Bremsbelag (11) auf die Bremsscheibe gerichtet werden können. Das in
Querrichtung existierende begrenzte Spiel des Vorsatzkörpers (23) ist größer als dasjenige Spiel, welches
zwischen den am Bremsbelagträger (9) ausgebildeten Augen
(13) und den die Augen tragenden Zapfen (7) des Bremssattels besteht. Auf diese Weise kommt der Bremsbelagträger
bei Bremsbetätigung in Anlage an die Zapfen (7) des Bremssattels, bevor der Vorsatzkörper (23) in Querrichtung Kräfte
auf den Zuspannkolben übertragen könnte. Der Zuspannkolben (17) ist hierdurch querkraftfrei, d.h. frei von der Gefahr
der Verkantung und des erhöhten Verschleisses der ihn
führenden Buchse im Bremssattelgehäuse geführt.

./...

FIG. 3

1

KB AG
11.12.1985
1869 / *Am - Ams*
0147P

B e s c h r e i b u n g

Scheibenbremse für Fahrzeuge

Die Erfindung betrifft eine Scheibenbremse nach dem Gattungsbegriff des Patentanspruches 1.

Bei vorzugsweise durch Druckmittel betätigbaren Scheibenbremskonstruktionen, so bei hydraulischen Bremssatteln, sind die Bremsbeläge in vielen Fällen so befestigt, daß sie in Richtung der Bremskraft tangential zur Scheibe Spiel aufweisen. Wird bei derartigen Bremssattelkonstruktionen in derjenigen Drehrichtung gebremst, bei der die Bremskraft der Schwerkraft entgegenwirkt, so wird während des Einbremsens der Belag im Rahmen seines Spiels quer zum Zuspann- bzw. Bremskolben der Zuspanneinrichtung bewegt. Infolge der Reibung zwischen Belagrücken und Kolben baut sich dadurch eine nachteilige Querkraft am Bremskolben auf. Als Folge hiervon ist ein erhöhter Verschleiß der Führungsbuchse des Bremskolbens als auch eine erhöhte Hysterese des Bremskolbens, hervorgerufen durch Axialreibung, hinzunehmen.

Davon ausgehend besteht die Aufgabe der Erfindung darin, eine Scheibenbremse der in Rede stehenden Art so auszubilden, daß der Brems- bzw. Zuspannkolben während der Bremsbetätigung im wesentlichen querkraftfrei geführt ist.

Zur Lösung dieser Aufgabe dienen die Merkmale nach dem Kennzeichnungsteil des Patentanspruches 1.

Der Vorsatzkörper ist bei geringer Bauhöhe in einfacher Weise zwischen der Stirnfläche des Zuspannkolbens und dem Bremsbelagträger der Scheibenbremse angeordnet, wobei im Bereich des Umfangs des Vorsatzkörpers eine einfache, elastische Dichtung ausreicht, den Vorsatzkörper sowohl axial zu halten als auch in Seitenrichtung abzufedern. Die Kraftübertragung vom Zuspannkolben auf den Vorsatzkörper kann mit ebenfalls baulich einfachen und im Handel üblichen Wälzelementen, so mit Hilfe von Kugeln vorgenommen werden. Da der Vorsatzkörper in Querrichtung gegenüber dem ihn führenden Brems- bzw. Zuspannkolben ein größeres Spiel besitzt als der ihn bei der Bremsung mitnehmende Bremsbelagträger gegenüber den Führungszapfen für den Bremsbelagträger am Bremssattel, werden keinerlei Querkräfte auf den Zuspannkolben übertragen. Eine Verkantung des pneumatisch oder hydraulisch oder auch durch mechanische Mittel beaufschlagbaren Zuspannkolbens innerhalb seiner Führungsbuchse ist hierdurch in wirksamer Weise ausgeschlossen. Die beweglichen Teile der Anordnung liegen hinter dem bei derartigen Bremsscheibenanordnungen im allgemeinen vorgesehenen Schutzbalg des Kolbens, dadurch sind die Teile immer gängig. Eine allenfalls verbleibende Restquerkraft ist nunmehr abhängig von der Elastizität des Ringes, welcher zwischen dem Außenumfang des Vorsatzkörpers und dem Zuspannkolben besteht. Die Rollreibung der Wälzkörper zwischen den Planflächen von Vorsatzkörper und Zuspannkolben ist hierbei im wesentlichen vernachläßigbar. Die Bremsscheibenanordnung ist infolge ihres einfachen und gleichzeitig robusten Aufbaues im Bereich des Zuspannkolbens auch für extreme Belastungen geeignet; dies gilt unabhängig von der Drehrichtung und somit unabhängig von der Bremskraft an der Bremsscheibe.

Vorteilhafte Ausgestaltungen und Weiterbildungen sind in weiteren Patentansprüchen aufgeführt.

Die Erfindung ist nachfolgend anhand eines Ausführungsbeispiel unter Bezugnahme auf die beigefügte Zeichnung erläutert.

Fig.1    ist eine perspektivische Ansicht einer Bremsscheibe mit einem diese umgreifenden Bremssattel, an welchem zwei Zuspanneinrichtungen vorgesehen sind;

Fig.2    ist eine vergrößerte, vereinfachte Einzelansicht eines Bremsbelagträgers unter Darstellung seiner Aufhängung an den ihn tragenden Zapfen des Bremssattels; und

Fig.3    ist eine Teilschnittansicht einer der Zuspanneinrichtungen unter Darstellung der erfindungsgemäßen Konstruktion im Bereich des Zuspannkolbens.

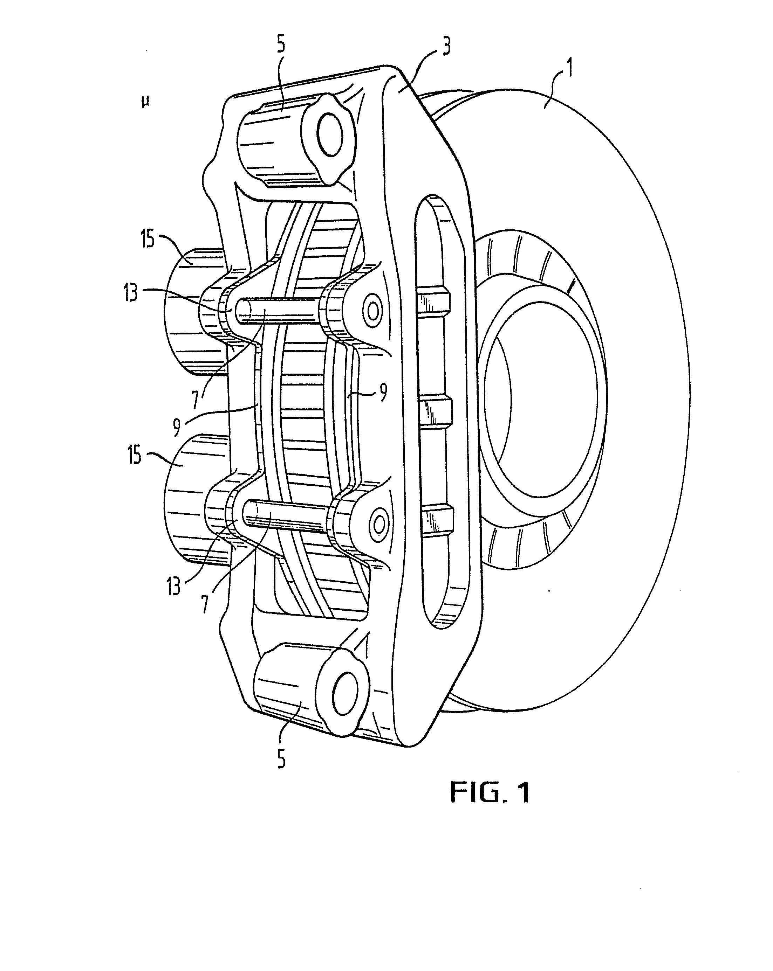

In Fig.1 der Zeichnung ist eine Bremsscheibe 1 dargestellt, welche im Bereich eines Teils ihres Außenumfanges von einem Bremssattel 3 umfaßt ist. Der Bremssattel 3 von an sich bekannter Konstruktion weist Lageraugen 5 auf, durch welche sich (nicht dargestellte) Lagerzapfen erstrecken. Diese ihrerseits sind zum Beispiel mittels Laschen an einem Tragkörper des Fahrzeuges befestigt, so zum Beispiel am Drehgestell eines Schienenfahrzeugs. Die Lageraugen 5 sind begrenzt beweglich auf den (nicht dargestgellten) Lagerzapfen geführt.

Die beidseits der Bremsscheibe 1 sich erstreckenden Schenkel des Bremssattels 3 sind zwischen den die Lageraugen 5 tragenden Sattelendteilen durch Zapfen 7 miteinander verbunden. Auf den Zapfen 7 sind in an sich bekannter Weise zu beiden Seiten der Bremsscheibe 1 Bremsbelagträger 9 geführt, welche ihrerseits je einen Bremsbelag 11 auf der der Bremsscheibe zugewandten Seite tragen.

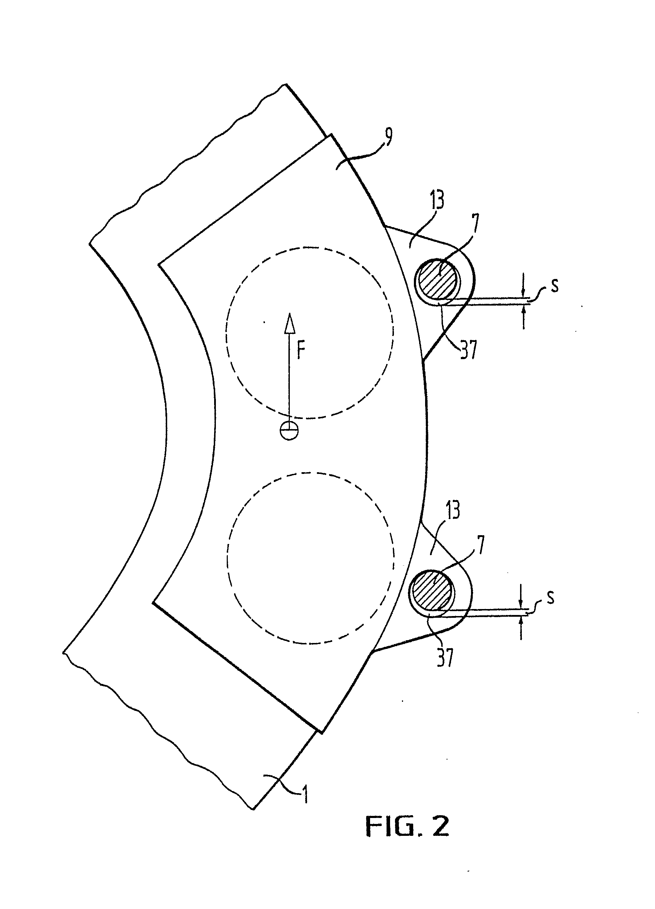

Die Bremsbelagträger besitzen die Form von sogenannten Belagblechen und weisen gemäß Fig.1 und 2 Augen 13 auf, welche von den Zapfen 7 durchsetzt sind, derart, daß die Bremsbelagträger in Richtung der Bremsscheibe und in abgewandter Richtung auf den Zapfen 7 axial beweglich sind. An einem der Schenkel des Bremssattels 3 sind Zuspanneinrichtungen 15 vorgesehen, welche im dargestellten Ausführungsbeispiel durch Druckmittel betätigbare Zuspannkolben 17 aufweisen. Den Zuspannkolben 17, welche durch Druckluft oder hydraulisch beaufschlagbar sind, kann auch eine Federspeichereinrichtung zugeordnet sein. Im Ausführungsbeispiel nach Fig.1 sind zwei derartige Zuspanneinrichtungen 15 vorgesehen. Die Zuspannkolben 17 dieser Zuspanneinrichtung sind in Bohrungen 19 des Bremssattelgehäuses axial verschieblich geführt und sind zum Beispiel im Bereich ihres stirnseitigen Endes jeweils durch eine Dichtung 21 abgedichtet.

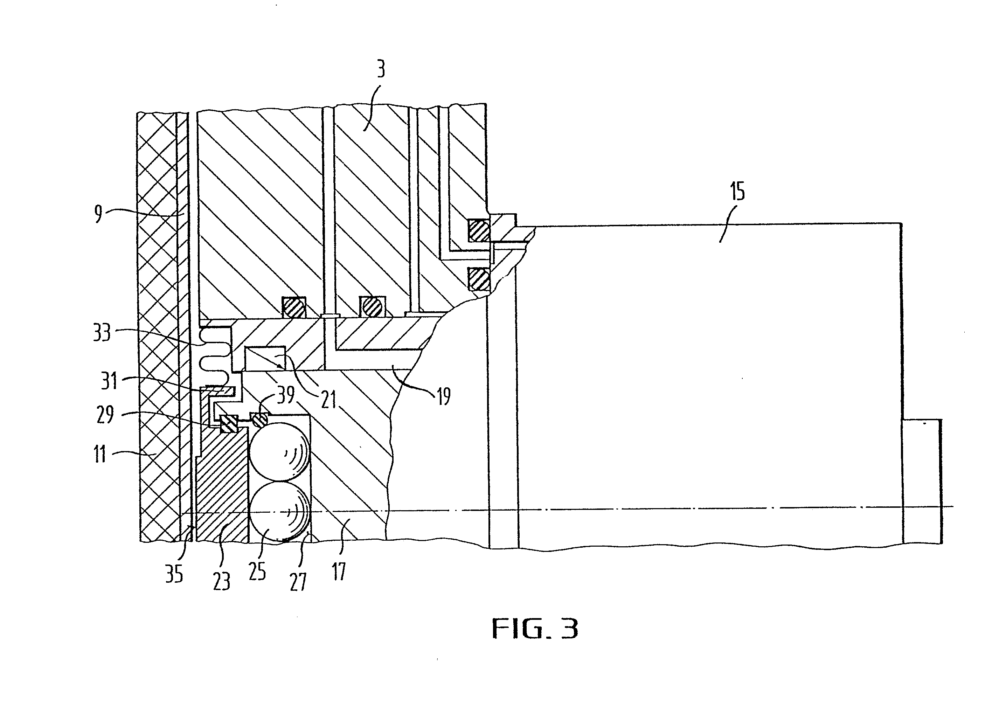

Gemäß der Erfindung ist dem Zuspannkolben 17 ein deckelförmiger Vorsatzkörper 23 zugeordnet. Der Vorsatzkörper 23 stützt sich im dargestellten Ausführungsbeispiel mit Hilfe von Wälzkörpern 25 an der zugewandten Planfläche 27 des Zuspannkolbens ab. Am Außenumfang des Vorsatzkörpers 23 ist ein elastischer Ring 29, so zum Beispiel ein O-Ring, vorgesehen. Ein sich an den Außenumfang des Vorsatzkörpers 23 anschließender Steg 31 kann vorgesehen sein, um die Befestigung eines das Eindringen von Schmutzteilchen verhindernden Balgkörpers 33 zu ermöglichen. Es können natürlich auch andere an sich bekannte Mittel vorgesehen sein, welche den Bereich des Zuspannkolbens 17 und der sich daran anschließenden Zuspanneinrichtung gegenüber Verschmutzung etc. schützen. Gemäß Fig.3 der Zeichnung ist die am stirnseitigen Ende des Vorsatzkörpers 23 vorgesehene Planfläche 35 bei unbetätigter Bremse unter einem gewissen Abstand zum Bremsbelagträger 9 geführt.

Die Arbeitsweise der erfindungsgemäßen Einrichtung ist wie folgt :

Es sei angenommen, daß die Drehrichtung der Bremsscheibe 1 in Fig.2 durch den Pfeil F wiedergegeben ist. Die Bremsscheibe 1 dreht sich demnach gemäß Fig.2 gegen den Uhrzeigersinn gerichtet. Der Bremsbelagträger 9 befindet sich bei nicht betätigter Bremse infolge der Schwerkraftwirkung in der dargestellten Lage, in welcher ein Spiel s zwischen den Zapfen 7 und den in den Augen 13 vorgesehenen Bohrungen 37 besteht. Bei Betätigung der Bremse, d.h. bei Aktivierung der Zuspanneinrichtungen 15, wird der den Bremsbelag 11 tragende Bremsbelagträger infolge axialer Beaufschlagung durch den vom Zuspannkolben 17 getragenen Vorsatzkörper 23 in Richtung der Bremsscheibe 1 verschoben, bis der Reibungseingriff zwischen Bremsbelag und Bremsscheibe stattfindet. In diesem Moment nimmt die Bremsscheibe den Bremsbelag und demnach den Bremsbelagträger in seiner Bewegungsrichtung mit. Da der Vorsatzkörper 23 seinerseits am Bremsbelagträger 9 angepreßt ist, wird er durch den Bremsbelagträger mitgenommen, d.h. in der Ansicht nach Fig.3 beispielsweise nach oben gerichtet. Da der Vorsatzkörper 23 mit Hilfe der Wälzkörper 25 gegenüber dem die Axialkraft vermittelnden Zuspannkolben 17 abgestützt ist, überträgt sich diese Bewegung nicht auf den Zuspannkolben 17, d.h., er bleibt im wesentlichen querkraftfrei. Der Vorsatzkörper 23 führt in der Ansicht nach Fig.3 eine nach oben gerichtete Relativbewegung gegenüber dem Zuspannkolben 17 aus, wobei die Wälzkörper 25 beim Abrollen des Vorsatzkörpers im wesentlichen den halben transversalen Weg durchlaufen. Hierbei werden sie an den in Fig.3 dargestellten elastischen Ring 39 angedrückt, wobei der Ring 39 zum Beispiel als O-Ring ausgestaltet sein kann. Der Ring 39 vermittelt die erforderliche Rückstellkraft gegenüber den Wälzkörpern 25, wenn die Bremse nachfolgend wieder freigegeben wird und der Vorsatzkörper 23 seinerseits durch die Rückstellkraft des Rings 29 in seine Ausgangslage zurückkehrt.

Von wesentlicher Bedeutung bei der vorstehend beschriebenen Funktion des Vorsatzkörpers 23 ist die Tatsache, daß sich der Bremsbelagträger 9 nach Durchlauf des Spiels s an die Zapfen 7 anlegt, bevor der Vorsatzkörper 23 eine Querbewegung vollführen kann, welche dazu führen könnte, daß unerwünschte Querkräfte auf den Zuspannkolben ausgeübt werden. Der Bremsbelagträger 9 wird also infolge des Reibungseingriffes an der Bremsscheibe nach oben angehoben, bis die Bohrungen 37 der Augen 13 das Spiel s durchlaufen haben. Der Abstand zwischen den Zapfen 7 und den Bohrungen 37 der Augen 13 ist somit kleiner als das Spiel, welches der Vorsatzkörper in Querrichtung bezüglich des Zuspannkolbens besitzt; die Brems-Reaktionskräfte gehen also über den Bremsbelagträger und die Zapfen in den Bremssattel und über diesen in die Lagerzapfen des Bremssattels ein, bevor die Querbewegung des Vorsatzkörpers dazu führen könnte, daß die Reaktionskräfte in Querrichtung direkt in den Zuspannkolben eingehen.

Die Erfindung ist nicht auf die dargestellte Ausführungsform des Bremssattelaufbaues und der Zuspanneinrichtung beschränkt. Grundsätzlich ist die Einrichtung nach der Erfindung bei allen durch Druckmittel oder durch mechanische Mittel beaufschlagbaren Bremsscheibenkonstruktionen von Schienen- oder Straßenfahrzeugen verwendbar, bei welchen mit Hilfe eines Druckstückes oder Kolbens ein Druck senkrecht zur Bremsscheibe ausgeübt wird. Der Vorsatzkörper, welcher im vorliegenden Ausführungsbeispiel zweckmäßigerweise aus gehärtetem Stahl besteht, um ein Eindrücken der Wälzkörper 25 zu vermeiden, kann jede beliebige Formgebung besitzen, welche derjenigen des Zuspannkolbens angepaßt ist. Wenn die Planfläche 27 des Zuspannkolbens Kreisform besitzt, dann können entsprechend der geometrischen Verhältnisse 3, 4 oder jede beliebige Anzahl von Wälzkörpern, so Kugeln verwendet werden, um die Rollagerung zwischen Wälzkörper und Zuspannkolben zu bilden. In gleicher Weise ist die Erfindung nicht auf die Formgebung der Ringe 29 und 39 beschränkt. Der Ring 29 hat die Aufgabe, den Vorsatzkörper axial bezüglich des Zuspannkolbens zu halten, wenn die Bremse nicht betätigt ist; darüberhinaus hat er die wesentliche Aufgabe, die seitliche.Bewegung des Vorsatzkörpers elastisch aufzunehmen und Rückstellkräfte zu vermitteln, wenn der Vorsatzkörper nach vorangehender Bremsbetätigung wieder in seine Ausgangslage zurückkehren soll. Auch der Ring 39 kann durch andere Federelemente ersetzt sein, falls diese eine geringe Seitwärtsbewegung der Wälzelemente zulassen. So können zum Beispiel federnde Zungen verwendet werden, welche quergerichtete elastische Kräfte auszuüben vermögen.

0230538

7

KB AG
11.12.1985
1869 /hn-ma
0147P

Bezugszeichenliste

1   Bremsscheibe

3   Bremssattel

5   Lagerauge

7   Zapfen

9   Bremsbelagträger

11  Bremsbelag

13  Auge

15  Zuspanneinrichtung

17  Zuspannkolben

19  Bohrung

21  Dichtung

23  Vorsatzkörper

25  Wälzkörper

27  Planfläche

29  Ring

31  Steg

33  Balgkörper

35  Planfläche

37  Bohrung

39  Ring

KB AG
11.12.1985
*200148* 1869 / *Am - Am*
0147P

P a t e n t a n s p r ü c h e

1. Scheibenbremse für Fahrzeuge, mit einem die Bremsscheibe umfassenden Bremssattel, welcher wenigstens eine vorzugsweise durch Druckmittel beaufschlagbare Zuspanneinrichtung mit einem Zuspannkolben trägt, wobei der Zuspannkolben auf einen vom Bremssattel geführten Bremsbelagträger mit einem Bremsbelag einwirkt und der Bremsbelagträger gegenüber der ihn tragenden Führung ein Spiel besitzt, dadurch gekennzeichnet, daß sich zwischen dem Bremsbelagträger (9) und dem stirnseitigen, zugewandten Ende des Zuspannkolbens (17) ein Vorsatzkörper (23) befindet, welcher durch den Zuspannkolben axial geführt und in Querrichtung relativ zum Zuspannkolben begrenzt beweglich ist.

2. Scheibenbremse nach Anspruch 1, dadurch gekennzeichnet, daß das Spiel zwischen dem Bremsbelagträger (9) und der ihn tragenden Führung (Zapfen 7) des Bremssattels kleiner ist als das in Querrichtung existierende Spiel zwischen Vorsatzkörper (23) und Zuspannkolben (17).

3. Scheibenbremse nach Anpruch 1 oder 2, dadurch gekennzeichnet, daß sich der Zuspannkolben (17) mit Hilfe von Wälzkörpern (25) gegenüber dem Vorsatzköprper (23) abstützt, und daß der Vorsatzkörper an seinem Außenumfang mittels eines elastischen Elements gegenüber dem Zuspannkolben(17) begrenzt beweglich abgefedert ist.

4. Scheibenbremse nach Anspruch 3, dadurch gekennzeichnet, daß zwischen dem Außenumfang des Vorsatzkörpers (23) und dem den Vorsatzkörper tragenden Zuspannkolben ein elastischer Ring (29), vorzugsweise ein O-Ring, angeordnet ist.

5. Scheibenbremse nach einem der vorangehenden Ansprüche, dadurch gekennzeichnet, daß der Spalt zwischen dem Vorsatzkörper (23) und dem Bremssattelgehäuse durch einen Balgkörper (33) abgedichtet ist.

6. Scheibenbremse nach einem der vorangehenden Ansprüche, dadurch gekennzeichnet, daß sich Wälzkörper (25) an ihrem Außenumfang mittels eines elastischen Ringes (39) gegenüber dem Innenumfang des Zuspannkolbens (17) abstützen, derart, daß die Wälzkörper (25) entgegen einer federnden Kraft in Querrichtung begrenzt bewegbar sind.

KB-AG
14.05.1987
200148/1869
TP-hn/ma
0479A

Europ. Patentanm. 86115939.0

ABGEÄNDERTE ANSPRÜCHE

P a t e n t a n s p r ü c h e

1. Scheibenbremse für Fahrzeuge, mit einem die Bremsscheibe umfassenden Bremssattel, welcher wenigstens eine vorzugsweise durch Druckmittel beaufschlagbare Zuspanneinrichtung mit einem Zuspannkolben trägt, wobei der Zuspannkolben auf einen vom Bremssattel geführten Bremsbelagträger mit einem Bremsbelag einwirkt und der Bremsbelagträger gegenüber der ihn tragenden Führung ein Spiel besitzt, dadurch gekennzeichnet, daß sich zwischen dem Bremsbelagträger (9) und dem stirnseitigen, zugewandten Ende des Zuspannkolbens (17) ein Vorsatzkörper (23) befindet, welcher durch den Zuspannkolben axial geführt und in Querrichtung relativ zum Zuspannkolben begrenzt beweglich ist, und daß das Spiel zwischen dem Bremsbelagträger (9) und der ihn tragenden Führung (Zapfen 7) des Bremssattels kleiner ist als das in Querrichtung existierende Spiel zwischen Vorsatzkörper (23) und Zuspannkolben (17).

2. Scheibenbremse nach Anpruch 1, dadurch gekennzeichnet, daß sich der Zuspannkolben (17) mit Hilfe von Wälzkörpern (25) gegenüber dem Vorsatzköprper (23) abstützt, und daß der Vorsatzkörper an seinem Außenumfang mittels eines elastischen Elements gegenüber dem Zuspannkolben(17) begrenzt beweglich abgefedert ist.

3. Scheibenbremse nach Anspruch 2, dadurch gekennzeichnet, daß zwischen dem Außenumfang des Vorsatzkörpers (23) und dem den Vorsatzkörper tragenden Zuspannkolben ein elastischer Ring (29), vorzugsweise ein O-Ring, angeordnet ist.

4. Scheibenbremse nach einem der vorangehenden Ansprüche, dadurch gekennzeichnet, daß der Spalt zwischen dem Vorsatzkörper (23) und dem Bremssattelgehäuse durch einen Balgkörper (33) abgedichtet ist.

5. Scheibenbremse nach einem der vorangehenden Ansprüche, dadurch gekennzeichnet, daß sich Wälzkörper (25) an ihrem Außenumfang mittels eines elastischen Ringes (39) gegenüber dem Innenumfang des Zuspannkolbens (17) abstützen, derart, daß die Wälzkörper (25) entgegen einer federnden Kraft in Querrichtung begrenzt bewegbar sind.

FIG. 1

FIG. 2

0230538

FIG. 3

**0230538**

Nummer der Anmeldung

Europäisches
Patentamt

**EUROPÄISCHER RECHERCHENBERICHT**

EP 86 11 5939

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | GB-A-1 050 623 (DUNLOP)<br>* Figur 6; Seite 2, Zeilen 99-106; Figur 8; Seite 2, Zeile 117 - Seite 3, Zeile 6; Anspruch 11 *<br><br>--- | 1,3-5 | F 16 D 55/22<br>F 16 D 65/02 |
| Y | DE-C-1 251 102 (MASCHINEN- UND WERKZEUGBAU ZUFFENHAUSEN)<br>* Spalte 2, Zeilen 26-52 *<br><br>----- | 1,3-5 | |

RECHERCHIERTE
SACHGEBIETE (Int. Cl.4)

F 16 D 55/00
F 16 D 65/00

Der vorliegende Recherchenbericht wurde für alle Patentansprüche erstellt.

| Recherchenort | Abschlußdatum der Recherche | Prüfer |
|---|---|---|
| BERLIN | 12-03-1987 | STANDRING M A |